# EUROPÄISCHE PATENTSCHRIFT

(11) **EP 1 481 580 B1**
(45) Veröffentlichungstag und Bekanntmachung des Hinweises auf die Patenterteilung: **17.09.2008**
(21) Anmeldenummer: 04012432.3
(22) Anmeldetag: 26.05.2004
(51) Int. Cl.: A01B 15/08

(54) **Pflugkörper**
Plow body
Corps de charrue

(30) Priorität: 28.05.2003 DE 10324240; 28.05.2003 DE 10324241
(43) Veröffentlichungstag der Anmeldung: 01.12.2004
(73) Patentinhaber: Lemken GmbH & Co. KG, 46519 Alpen (DE)
(72) Erfinder: Hönnekes, Ernst, 47652 Weeze (DE); Meurs, Wilhelm, 46519 Alpen (DE); Jochums, Dieter, 47199 Duisburg (DE); Gelen, Lars, 47495 Rheinberg (DE); de Vries, Ruud, 6543 PP Nijmegen (NL)
(74) Vertreter: Schulte, Jörg

(56) Entgegenhaltungen:
- DE-A- 3 318 159
- DE-A- 10 018 279
- DE-C- 167 043
- DE-U- 8 701 991
- US-A- 4 671 363

## Beschreibung

Die Erfindung betrifft einen Pflugkörper mit einem Körperrumpf, einem Schar und mit einem mehrteiligen Streichblech mit fingerartigen Streichblechstreifen, die mit mindestens zwei fingerartigen Stützaufnahmen des Körperrumpfes verbunden sind.

Ein solcher Pflugkörper mit Streichblech wurde bereits über das DE-GM 83 20 000das DE-GM 87 01 991 und die DE-A-33 18 159 veröffentlicht. Dieser Pflugkörper weist ein Streichblech auf, das aus mehreren einzelnen Streichblechstreifen besteht, die an den Körperrumpf direkt oder an kurze Stützaufnahmen des Körperrumpfes angeschraubt sind. Dieser Pflugkörper weist durch die Streichblechstreifen zwar große Freiräume auf, die einer Verstopfungsgefahr entgegen wirken, ist aber für die Praxis völlig unbrauchbar, weil bereits nach geringem Verschleiß der Streichblechstreifen bzw. des Streichbleches diese Bauteile brechen. Außerdem federn die einzelnen, nicht miteinander verbundenen Streichblechstreifen so weit nach, dass häufig keine richtige Wendearbeit des Pflugkörpers gegeben ist. Dies wird nach der DE-A-33 18 159 und dem DE-GM 87 01 991 versucht durch jedem Streifen zugeordnete Streichblechstützen in Grenzen zu halten. Die zusätzlichen Streichblechstützen erschweren die Montage und verengen die Freiräume zwischen den Streichblechstreifen. Bei dem mehrteiligen, auf einzelne Streichblechstreifen verzichtenden Streichblech nach dem russischen Urheberschein 320 247 sind eine Vielzahl von Befestigungsmitteln erforderlich, um die Einzelteile des Streichbleches miteinander zu verbinden. Dessen Unterteilung ist somit sehr montageunfreundlich.

Der Erfindung liegt daher die Aufgabe zugrunde, einen unsymmetrischen Pflugkörper mit Streichblech zu schaffen, bei dem unter Beibehaltung der großen Freiräume hohe Standzeiten bei Einsatz von Streichblechstreifen zu erreichen sind. Außerdem soll die Montage sicher und einfach sein.

Diese Aufgabe wird erfindungsgemäß dadurch gelöst, dass die Stützaufnahmen mindestens die halbe Länge des gesamten Streichbleches aufweisen und ohne eine zusätzliche Streichblechstütze das Streichblech bzw. die Streichblechstreifen aufnehmend und abstützend ausgebildet sind.

Unter Erhaltung der notwendigen großen Freiräume zwischen den einzelnen Streichblechstreifen ist durch die Streichblechabstützung ein Brechen der Bauteile wirksam verhindert. Außerdem kann das Streichblech bzw. können die Streichblechstreifen schnell und einfach montiert und demontiert werden, sodass sich auch günstige Montagezeiten erreichen lassen. Durch die Vielzahl und die Länge der fingerartigen Stützaufnahmen können diese entsprechend leicht dimensioniert werden, und zwar angepasst an die Belastung, die auf den jeweiligen Streichblechbereich wirkt. Auch dies begünstigt somit die Stabilität und die Langlebigkeit derartiger Pflugkörper.

Gemäß einer zweckmäßigen Weiterbildung ist vorgesehen, dass die Stützaufnahmen vom handflächenartigen Mittelteil ausgehend ausgebildet sind. Die Stützaufnahmen bilden vorteilhaft hierbei ein wirksames Ganzes, wobei diese Ausbildung sich besonders günstig und vorteilhaft verwirklichen lässt, wenn es sich um ein Gussteil oder eine Schweißkonstruktion handelt. Aber auch bei anderer Bauweise kann über das Mittelteil und die Stützaufnahmen das Streichblech insgesamt vorteilhaft stabilisiert und für lange Standzeiten ausgerüstet werden.

Schließlich sieht die Erfindung vor, dass das mehrteilige Streichblech mindestens aus einem Streichblechvorderteil und dem die fingerartigen Streichblechstreifen aufweisenden Streichblechhinterteil besteht. Durch diese Mehrteiligkeit kann in bekannter Weise der Ausnutzungsgrad eines Streichbleches optimiert werden, da die Einzelteile dem Verschleiß entsprechend getrennt auswechselbar sind.

Vorteilhafterweise sollte mindestens ein Streichblechstreifen als Tragstreifen für die Aufnahme einer Keramikbeschichtung, Hartmetallbeschichtung oder von dünnen beschichteten Streichblechstreifen oder Streifensegmenten ausgebildet sein. Durch das Vorsehen der Tragstreifen können dünne, leicht auswechselbare, beschichtete Streifen oder Streifensegmente aufgebracht werden, die so die Standzeiten des Flugkörpers bzw. seiner Einzelteile deutlich erhöhen. Insbesondere bei dem Einsatz von Streifensegmenten braucht nicht der komplette Streichblechstreifen, sondern nur Teile davon ausgewechselt werden. Durch diese Ausführungsform ist es möglich, das zur Verfügung stehende Verschleißmaterial praktisch zu 100 % auszunutzen.

Erfindungsgemäß ist schließlich vorgesehen, dass alle Streichblechstreifen als Tragstreifen ausgebildet sind. Durch diese Ausführung kann die zuvor erwähnte Optimierung der Materialausnutzung für alle Streichblechstreifen genutzt werden.

Nach einer weiteren zweckmäßigen Ausführungsform ist vorgesehen, dass das mehrteilige Streichblech neben dem Streichblechvorderteil und dem Streichblechhinterteil ein Streichblechmittelteil aufweist, das rechteckig ausgebildet und in Arbeitsrichtung vorne an das Streichblechvorderteil, unten an das Schar und hinten und oben an das Streichblechhinterteil angrenzend ausgebildet ist. Ein derartiges Streichblech ist einfach herzustellen, kann in extrem kurzen Montagezeiten angebracht werden und erbringt keine Passprobleme. Hervorzuheben ist vor allem, dass die Hauptverschleißteile einfach und schnell auswechselbar sind, was das Streichblech betrifft, wobei man eben nicht das gesamte Streichblech auswechseln muss, sondern nur das besonders dem Verschleiß unterliegende Teil des Streichbleches, das gleichzeitig auch noch einen optimalen Anschluss zu den übrigen Teilen wie dem Schar erbringt.

Hierzu ist ergänzend vorgesehen, dass sowohl das Streichblechvorderteil als auch das Streichblechmittelteil mit nur einem Befestigungsmittel mit dem Körperrumpf verbindbar ausgebildet sind. Durch das Vorsehen nur eines Befestigungsmittels pro Bauteil wird bereits Montagezeit in der Fertigung eingespart, aber auch beim Wechsel von verschlissenen Einzelteilen.

Als Befestigungsmittel sollen Senkkopfschraube zum Einsatz kommen, wobei gemäß einer Weiterbildung der Erfindung vorgesehen ist, dass das jeweilige Befestigungsmittel als Senkkopfschraube mit vorzugsweise Hartmetall beschichteter Kopffläche ausgebildet ist. Durch dieses Merkmal können auch mit Hartmetall oder Keramik beschichtete Bauteile mit dem Befestigungsmittel fixiert werden, ohne die Gefahr, das Bauteil durch vorzeitig verschlissene Befestigungsmittel zu verlieren. Aber auch dann, wenn die Bauteile nicht mit Keramik oder ähnlichem Material beschichtet sind, ist eine solche Ausbildung der Befestigungsschrauben von Vorteil, weil sie als letzte verschleißen. Aus diesem Grunde ist es auch von Vorteil, wenn auch die übrigen Befestigungsmittel eine mit Hartmetall beschichtete Kopffläche aufweisen. Die Mehrkosten für eine derartige Ausbildung der Befestigungsmittel treten hinter den genannten Vorteilen deutlich zurück.

Ein mehrfacher Einsatz der einzelnen Teile des Streichbleches wird insbesondere dadurch möglich, dass das Streichblechmittelteil um eine annähernd waagerechte Mittelachse spiegelbildlich symmetrisch ausgebildet ist. Es kann auf diese Art und Weise auf demselben Pflugkörper um 180° gedreht wieder montiert und genutzt werden. Diese Wendbarkeit gewährleistet eine noch größere Materialausnutzung des Streichblechmittelteils und damit verbesserte Standzeiten.

Um die Langlebigkeit der Stützaufnahmen sicherzustellen ist gemäß der Erfindung vorgesehen, dass die Stützaufnahmen im Erdflussschatten angeordnet sind. Sie selbst unterliegen somit keinem Verschleiß und können damit entsprechend extrem lang dafür sorgen, dass die daran befestigten Streichblechstreifen wirksam bleiben.

Eine zweckmäßige Weiterbildung sieht vor, dass die Stützaufnahmen mit dem jeweiligen Rand der Streichblechstreifen abschließend oder gegenüber dem Rand zurückspringend ausgebildet sind. Hierdurch ist sichergestellt, dass die eigentlichen Stützaufnahmen durch den Erdfluss nicht beeinträchtigt werden können, selbst wenn es sich um sehr klebrigen Boden handelt. Dabei besteht zusätzlich die Möglichkeit, den Stützaufnahmen eine entsprechende Form zu geben, beispielsweise eine Abrundung, die den Erdfluss zwischen den Streichblechstreifen begünstigt bzw. umgekehrt verhindert, dass sich hier Erdreich festsetzt.

Die Erfindung zeichnet sich insbesondere dadurch aus, dass insgesamt ein Pflugkörper geschaffen ist, der aufgrund der besonderen Konstruktion des Körperrumpfes mit den Stützaufnahmen große Freiräume schafft und so äußerst verstopfungsunanfällig ist und der aufgrund der besonderen Ausführung der einzelnen Streichblechteile und der unterstützenden Stützaufnahmen eine optimale Ausnutzung des zur Verfügung stehenden Verschleißmaterials garantiert. Darüber hinaus können die einzelnen Teile leicht montiert und ggf. je nach Verschleißgrad ausgetauscht oder gar gedreht werden.

Weitere Einzelheiten und Vorteile des Erfindungsgegenstandes ergeben sich aus der nachfolgenden Beschreibung und den zugehörigen Zeichnungen, in denen die notwendigen Einzelheiten dargestellt sind. Es zeigen:
- Figur 1: den Pflugkörpers in Vorderansicht und
- Figur 2: den Pflugkörper in Rückansicht.

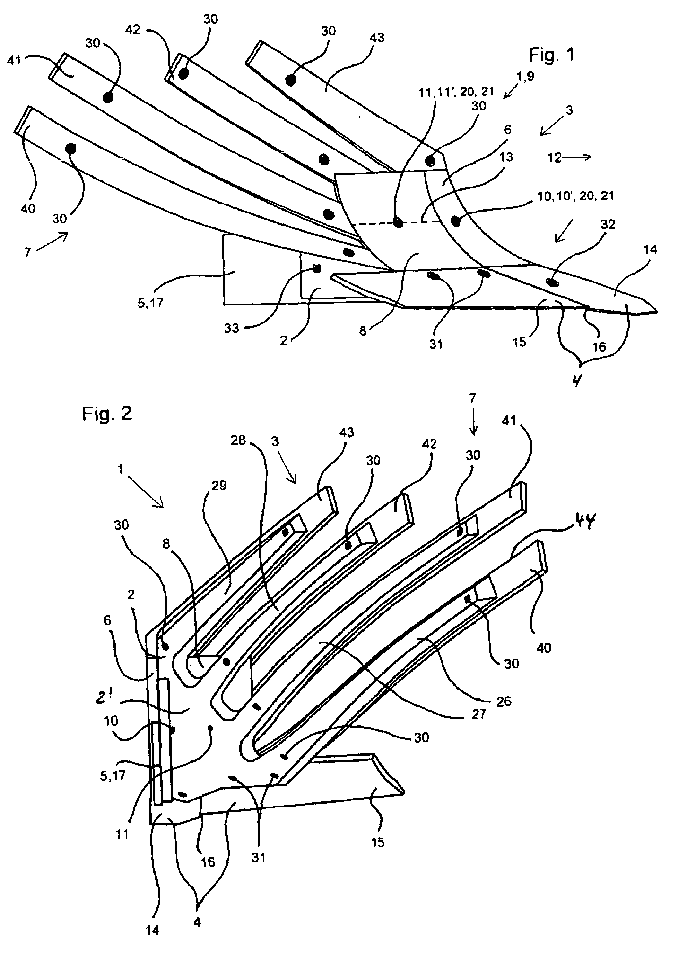

Die Figur 1 zeigt die Streichblechseite des Flugkörpers 1. Dieser Pflugkörper 1 weist einen Körperrumpf 2 auf, der das Schar 4 mit der Scharspitze 14 und dem Scharblatt 15 trägt. Im Bereich der Stoßkante 16 überlappen Teile der Scharspitze 14 und des Scharblattes 15, um so keinen Spalt entstehen zu lassen, in dem sich beispielsweise Draht oder Bindfäden festsetzen könnten. Der Körperrumpf 2 trägt das Streichblech 3 mit dem Streichblechvorderteil 6, dem Streichblechmittelteil 8 und dem Streichblechhinterteil 7. Das Streichblechmittelteil 8 ist rechteckig und spiegelbildlich zur Mittelachse 13 ausgebildet und in Arbeitsrichtung 12 gesehen hinter dem Streichblechvorderteil 6 angeordnet. Das Streichblechhinterteil 7 besteht hier aus den Streichblechstreifen 40, 41, 42 und 43. Die einzelnen Streichblechstreifen 40, 41, 42, 43 sind mit den Befestigungsmitteln 30 mit fingerartigen Stützaufnahmen 26, 27, 28, 29 des Körperrumpfes 2 verbunden. Dies ist insbesondere der Figur 2 zu entnehmen. Der Körperrumpf 2 trägt außerdem die Anlage 17, die als seitliches Führungsmittel 5 dient. Die Anlage 17 ist mit dem Befestigungsmittel 33 mit dem Körperrumpf 2 verbunden.

Die Scharspitze 14 ist mit den Befestigungsmitteln 32 und das Scharblatt 15 mit den Befestigungsmitteln 31 mit dem Körperrumpf 2 verbunden.

Um eine schnelle Austauschbarkeit der einzelnen Bauteile zu gewährleisten, wird das Streichblechvorderteil 6 und das Streichblechmittelteil 8 jeweils nur mit einem Befestigungsmittel 11 am Körperrumpf 2 befestigt. Die Befestigungsmittel 10, 11 sind als Senkkopfschrauben 20 ausgebildet, deren Kopffläche 21 mit einer verschleißfesten Beschichtung 10', 11' versehen ist, die verhindert, dass zum Beispiel beim Einsatz von einem Streichblechvorderteil 6 oder Streichblechmittelteil 8 mit einer Hartmetall- oder Keramikbeschichtung das Befestigungsmittel 10, 11schneller verschleißt als die Bauteile selbst. Der in Figur 1 dargestellte Pflugkörper 1 ist ein rechts wendender Pflugkörper 9. In Verbindung mit einem Drehpflug kommen zusätzlich auch links wendende Pflugkörper zum Einsatz, die spiegelbildlich ausgebildet sind.

Figur 2 zeigt eine Rückansicht des Flugkörpers 1. Deutlich erkennbar sind hier die einzelnen fingerartigen Stützaufnahmen 26, 27, 28 und 29, die Bestandteil des Körperrumpfes 2 sind. Die einzelnen fingerartigen Stützaufnahmen 26, 27, 28, 29 tragen die Streichblechstreifen 40, 41, 42 und 43. Die einzelnen Streichblechstreifen 40 , 41, 42, 43 werden so weit unterstützt, dass sie nicht abbrechen können, auch dann nicht, wenn sie fast vollständig verschlissen sind und ohne dass irgendwelche zusätzliche Streichblechstützen zum Einsatz kommen. Die einzelnen Streichblechstreifen 40, 41, 42, 43 sind über die Befestigungsmittel 30 mit dem Körperrumpf 2 bzw. mit den fingerartigen Stützaufnahmen 26, 27, 28, 29 verbunden. Der Körperrumpf 2 trägt auch das Streichblechvorderteil 6, das über den Körperrumpf 2 seitlich übersteht. Seitlich an das Streichblechvorderteil 6 des Streichbleches 3 grenzt das Streichblechmittelteil 8 an. Über die beiden Befestigungsmittel 10, 11 werden das Streichblechvorderteil 6 und das Streichblechmittelteil 8 mit dem Körperrumpf 2 verbunden.

Figur 2 verdeutlicht auch die Überlappung des Scharblattes 15 und der Scharspitze 14 im Bereich der Stoßkante 16.

## Patentansprüche

1. Pflugkörper mit einem Körperrumpf (2), einem Schar (4) und mit einem mehrteiligen Streichblech (3) mit fingerartigen Streichblechstreifen (40, 41, 42, 43), die mit mindestens zwei fingerartigen Stützaufnahmen (26, 27, 28, 29) des Körperrumpfes (2) verbunden sind,
**dadurch gekennzeichnet,**
**dass** die Stützaufnahmen (26, 27, 28, 29) mindestens die halbe Länge des gesamten Streichbleches (3) aufweisen und ohne eine zusätzliche Streichblechstütze das Streichblech (3) bzw. die Streichblechstreifen (40, 41, 42, 43) aufnehmend und abstützend ausgebildet sind.

2. Pflugkörper nach Anspruch 1,
**dadurch gekennzeichnet,**
**dass** die Stützaufnahmen (26, 27, 28, 29) vom handflächenartigen Mittelteil (2') ausgehend ausgebildet sind.

3. Pflugkörper nach einem oder mehreren der vorhergehenden Ansprüche,
**dadurch gekennzeichnet,**
**dass** das mehrteilige Streichblech (3) mindestens aus einem Streichblechvorderteil (6) und einem die fingerartigen Streichblechstreifen (40, 41, 42, 43) aufweisenden Streichblechhinterteil (7) besteht.

4. Pflugkörper nach Anspruch 1,
**dadurch gekennzeichnet,**
**dass** mindestens ein Streichblechstreifen (40, 41, 42, 43) als Tragstreifen für die Aufnahme einer Keramikbeschichtung, Hartmetallbeschichtung oder von dünnen beschichteten Streichblechstreifen oder Streifensegmenten ausgebildet ist.

5. Pflugkörper nach Anspruch 4,
**dadurch gekennzeichnet,**
**dass** alle Streichblechstreifen (40, 41, 42, 43) als Tragstreifen ausgebildet sind.

6. Pflugkörper nach Anspruch 1,
**dadurch gekennzeichnet,**
**dass** das mehrteilige Streichblech (3) neben dem Streichblechvorderteil (6) und dem Streichblechhinterteil (7) ein Streichblechmittelteil (8) aufweist, das rechteckig ausgebildet ist und in Arbeitsrichtung (12) vorne an das Streichblechvorderteil (6), unten an das Schar (4) und hinten und oben an das Streichblechhinterteil (7) angrenzend ausgebildet ist.

7. Pflugkörper nach Anspruch 6,
**dadurch gekennzeichnet,**
**dass** sowohl das Streichblechvorderteil (6) als auch das Streichblechmittelteil (8) mit nur einem Befestigungsmittel (10, 11) mit dem Körperrumpf (2) verbindbar ausgebildet sind.

8. Pflugkörper nach Anspruch 7,
**dadurch gekennzeichnet,**
**dass** das jeweilige Befestigungsmittel (10, 11) als Senkkopfschraube (20) mit vorzugsweise Hartmetall beschichteter Kopffläche (21) ausgebildet ist.

9. Pflugkörper nach Anspruch 8,
**dadurch gekennzeichnet,**
**dass** auch die übrigen Befestigungsmittel (30, 31, 32, 33) eine mit Hartmetall beschichtete Kopffläche aufweisen.

10. Pflugkörper nach Anspruch 6,
**dadurch gekennzeichnet,**
**dass** das Streichblechmittelteil (8) um eine annähernd waagerechte Mittelachse (13) spiegelbildlich symmetrisch ausgebildet ist.

11. Pflugkörper nach Anspruch 1,
**dadurch gekennzeichnet,**
**dass** die Stützaufnahmen (26, 27, 28, 29) im Erdflußschatten angeordnet sind.

12. Pflugkörper nach Anspruch 1,
**dadurch gekennzeichnet,**
**dass** die Stützaufnahmen (26, 27, 28, 29) mit dem jeweiligen Rand (44) der Streichblechstreifen (40, 41, 42, 43) abschließend oder gegenüber dem Rand (44) zurückspringend ausgebildet sind.

## Claims

1. A plough body with a frog (2), a share (4) and with a multipart mould board (3) with finger-like mould board strips (40, 41, 42, 43) which are connected to at least two finger-like support receptacles (26, 27, 28, 29) of the frog (2),
**characterized in that**
the support receptacles (26, 27, 28, 29) are of at least half the length of the total mould board (3) and are formed to receive and support the mould board (3) or the mould board strips (40, 41, 42, 43) without an additional mould board support.

2. The plough body according to Claim 1,
**characterized in that**
the support receptacles (26, 27, 28, 29) are formed starting from the palm-like centre part (2).

3. The plough body according to one or more of the preceding Claims,
**characterized in that**
the multipart mould board (3) consists at least of a mould board front part (6) and a mould board rear part (7) comprising the finger-like mould board strips (40, 41, 42, 43).

4. The plough body according to Claim 1,
**characterized in that**
at least one mould board strip (40, 41, 42, 43) is formed as a base strip for receiving a ceramic coating, cemented carbide coating or thin coated mould board strips or strip segments.

5. The plough body according to Claim 4,
**characterized in that**
all the mould board strips (40, 41, 42, 43) are formed as base strips.

6. The plough body according to Claim 1,
**characterized in that**
the multipart mould board (3) comprises, in addition to the mould board front part (6) and the mould board rear part (7), a mould board centre part (8) which is of rectangular formation and formed adjoining the mould board front part (6) at the front, the share (4) at the bottom and the mould board rear part (7) at the rear and the top in the working direction (12).

7. The plough body according to Claim 6,
**characterized in that**
both the mould board front part (6) and the mould board centre part (8) are formed so that they can be connected to the frog (2) with just one fastening means (10, 11).

8. The plough body according to Claim 7,
**characterized in that**
the respective fastening means (10,11) is formed as a countersunk head screw (20) with a head surface (21) preferably coated with cemented carbide.

9. The plough body according to Claim 8,
**characterized in that**
the other fastening means (30, 31, 32, 33) also comprise a head surface coated with cemented carbide.

10. The plough body according to Claim 6,
**characterized in that**
the mould board centre part (8) is formed in mirror-inverted symmetrical fashion about an approximately horizontal centre axis (13).

11. The plough body according to Claim 1,
**characterized in that**
the support receptacles (26, 27, 28, 29) are disposed in the earth flow shadow.

12. The plough body according to Claim 1,
**characterized in that**
the support receptacles (26, 27, 28, 29) are formed flush with the respective edge (44) of the mould board strips (40, 41, 42, 43) or set back with respect to the edge (44).

## Revendications

1. Corps de charrue avec un sep de corps (2), un soc (4) et avec un versoir (3) à plusieurs pièces avec des bandes de versoirs (40, 41, 42, 43) en forme de doigts qui sont reliées à au moins deux logements d'appui (26, 27, 28, 29) en forme de doigts du sep de corps (2),
**caractérisé en ce que**
les logements d'appui (26, 27, 28, 29) présentent au moins la moitié de la longueur du versoir (3) entier et sont formés de manière à loger et appuyer, sans un appui de versoir supplémentaire, le soc (3) et les bandes de versoirs (40, 41, 42, 43).

2. Corps de charrue selon la revendication 1,
**caractérisé en ce que**
les logements d'appui (26, 27, 28, 29) sont formés de manière à partir de la pièce centrale (2) en forme de paume de main.

3. Corps de charrue selon l'une quelconque ou plusieurs des revendications précédentes,
**caractérisé en ce que**
le versoir (3) à plusieurs pièces se compose d'au moins d'une partie avant de versoir (6) et une partie arrière de versoir (7) présentant les bandes de versoirs en forme de doigts (40, 41, 42, 43).

4. Corps de charrue selon la revendication 1,
**caractérisé en ce que**
au moins une bande de versoir (40, 41, 42,43) est formée comme bande support pour le logement d'un revêtement de céramique, d'un revêtement en métal dur ou de bandes de versoirs ou segments de bandes à revêtement fin.

5. Corps de charrue selon la revendication 4,
**caractérisé en ce que**
toutes les bandes de versoirs (40, 41, 42, 43) sont formées comme bandes supports.

6. Corps de charrue selon la revendication 1,
**caractérisé en ce que**
le versoir (3) à plusieurs pièces présente, outre la partie avant de versoir (6) et la partie arrière de versoir (7) une partie centrale de versoir (8) qui est formée de manière rectangulaire et est formée de manière à être adjacente à l'avant dans le sens de travail (12) à la partie avant de versoir (6), en bas au soc (4) et à l'arrière et en haut à la partie arrière de versoir (7).

7. Corps de charrue selon la revendication 6,
**caractérisé en ce que**
aussi bien la pièce avant de versoir (6) que la pièce centrale de versoir (8) sont formées de manière à pouvoir être reliées avec un seul moyen de fixation (10, 11) au sep de corps (2).

8. Corps de charrue selon la revendication 7,
**caractérisé en ce que**
le moyen de fixation (10, 11) correspondant est formé comme vis à tête fraisée (20) avec surface de tête (21) revêtue de préférence de métal dur.

9. Corps de charrue selon la revendication 8,
**caractérisé en ce que**
les autres moyens de fixation (30, 31, 32, 33) aussi présentent une surface de tête revêtue de métal dur.

10. Corps de charrue selon la revendication 6,
**caractérisé en ce que**
la partie centrale de versoir (8) est formée symétriquement autour d'un axe central (13) pratiquement horizontal.

11. Corps de charrue selon la revendication 1,
**caractérisé en ce que**
les logements d'appui (26, 27, 28, 29) sont disposés dans l'ombre de solifluxion.

12. Corps de charrue selon la revendication 1,
**caractérisé en ce que**
les logements d'appui (26, 27, 28, 29) sont formés de manière à être en alignement avec le bord (44) correspondant des bandes de versoirs (40, 41, 42, 43) ou se rétracter par rapport au bord (44).
